# EUROPEAN PATENT APPLICATION

(11) **EP 3 263 403 A1**
(43) Date of publication of application: **03.01.2018**
(21) Application number: 17177918.4
(22) Date of filing: 26.06.2017
(51) Int. Cl.: B60P 3/34, E04H 15/20

(54) **INTEGRATED SYSTEM FOR INCREASING THE LIVING CAPACITY OF RECREATIONAL AND GENERAL MOTOR VEHICLES**

(30) Priority: 01.07.2016 IT 201600668388 U
(71) Applicant: Angeli, Omar, 47822 Santarcangelo di Romagna (RN) (IT)
(72) Inventor: Angeli, Omar, 47822 Santarcangelo di Romagna (RN) (IT)
(74) Representative: Modiano, Micaela Nadia

(57) **Abstract**

An integrated system (1) for increasing the living capacity of recreational and general motor vehicles (2), which comprises an inflatable chamber (3), made of polymeric material, which is provided with means of sealed anchoring to at least one respective portion (4) of a vehicle (2). At least one forced ventilation turbine is coupled to the chamber (3) for the corresponding inflation and maintenance in the configuration of maximum space occupation.

## Description

The present invention relates to an integrated system for increasing the living capacity of recreational and general motor vehicles.

The present invention relates to an innovative integrated system for increasing the living spaces of all motor vehicles (including vehicles for professional use, emergency vehicles, rapid response vehicles and the like) and recreational vehicles (vans, camper vans, caravans, cars etc.).

The possibility is known of using vehicles as fully-fledged support bases for carrying out predefined activities (for example in itinerant trading and in open-air markets, cars and vans are used as stockrooms and/or as changing rooms) and/or as dwellings (for example camper vans, caravans, and specially-fitted-out vehicles).

In all the cases indicated, the reduced size of vehicles are such as to make some activities inconvenient: for example it is necessary to allocate a portion of the cargo compartment for use as a changing room (thus limiting the area that can be used for storage) or, further, in camper vans the tables and benches need to be removed in order to set up the beds.

By contrast, a large-sized vehicle is more inconvenient to drive in traffic and on some roads and, in addition, it can require specific driving licenses, such as those for trucks and/or HGVs.

The aim of the present invention is to solve the above mentioned drawbacks, by providing an integrated system for increasing the living capacity of recreational and general motor vehicles which is simple and convenient in use and is adapted to expand the spaces available to users.

Within this aim, an object of the present invention is to provide an integrated system for increasing the living capacity of recreational and general motor vehicles that does not require the use of large-sized vehicles.

Another object of the present invention is to provide an integrated system for increasing the living capacity of recreational and general motor vehicles that can be integrated completely with the vehicle when parked, optionally also using its services (heating, cooling, lighting etc).

Another object of the present invention is to provide an integrated system for increasing the living capacity of recreational and general motor vehicles which is low cost, easily and practically implemented, and safe in use.

This aim and these objects are achieved by an integrated system for increasing the living capacity of recreational and general motor vehicles, characterized in that it comprises an inflatable chamber, made of polymeric material, which is provided with means of sealed anchoring to at least one respective portion of a vehicle, at least one forced ventilation turbine being coupled to said chamber for the corresponding inflation and maintenance in the configuration of maximum space occupation.

Further characteristics and advantages of the invention will become better apparent from the detailed description that follows of a preferred, but not exclusive, embodiment of the integrated system for increasing the living capacity of recreational and general motor vehicles according to the invention, which is illustrated by way of non-limiting example in the accompanying drawings, wherein:

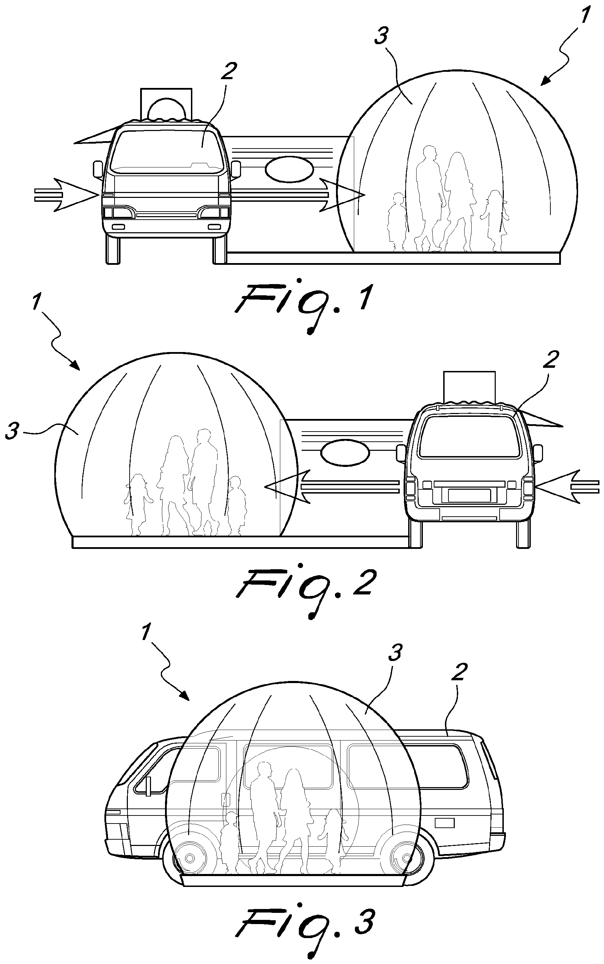

Figure 1 is a front elevation view of an integrated system for increasing the living capacity of recreational and general motor vehicles according to the invention;
Figure 2 is a rear view of the system of Figure 1;
Figure 3 is a side view from the right of the system of Figure 1;

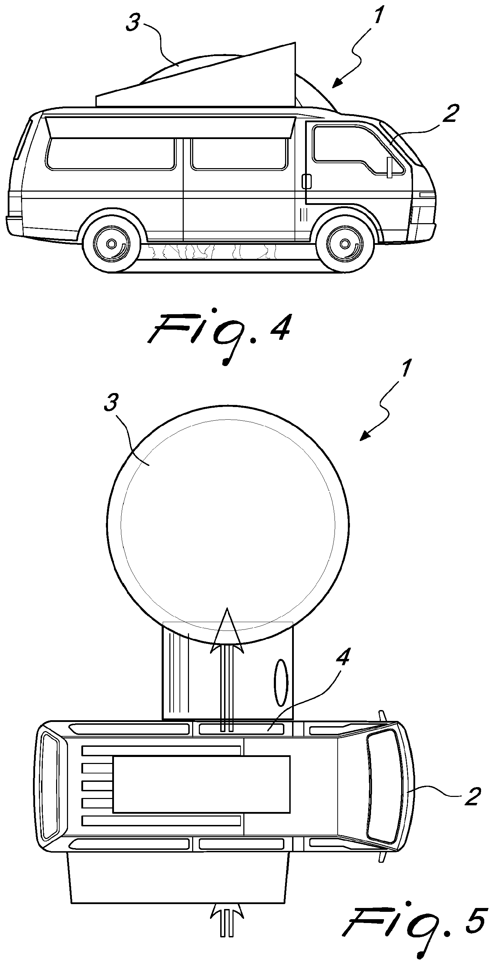

Figure 4 is a side view from the left of the system of Figure 1;
Figure 5 is a view from above of the system of Figure 1;

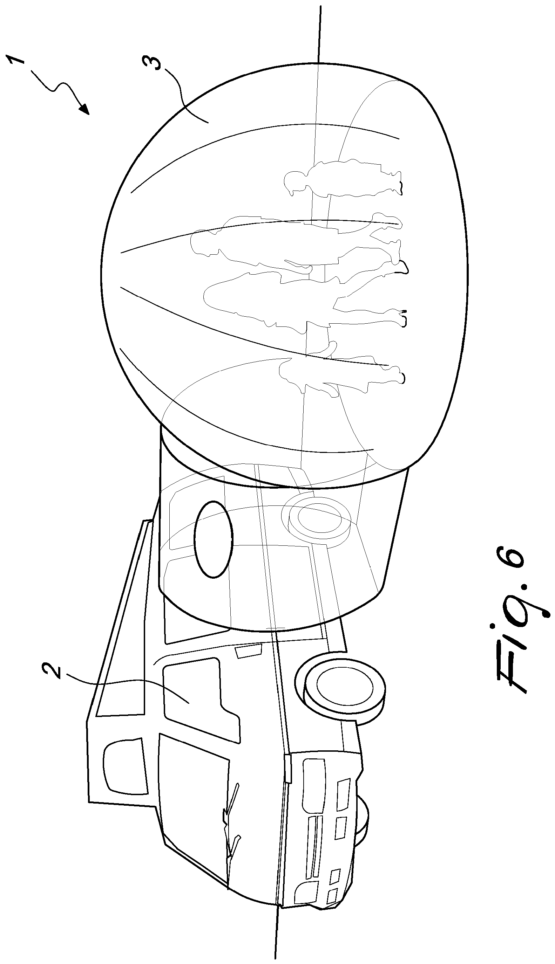

Figure 6 is a perspective view of the system of Figure 1.

With particular reference to the figures, the reference numeral 1 generally designates an integrated system for increasing the living capacity of recreational and general motor vehicles.

The system according to the invention comes from the idea of combining the existing technology of inflatable covers (used mainly for creating play structures for children and/or for industrial use) with the itinerant tourism sector, in order to make the vehicles 2 more comfortable, in particular vehicles for recreational use (i.e. camper vans, caravans and the like).

It should be noted that the present invention is also intended for vehicles for work use: for example vehicles used in itinerant trading (to provide showrooms, changing rooms and the like, and/or vehicles used for rapid response, in which it can be necessary to create work environments that are isolated from the outside in which to plan the activities to be carried out and prepare the corresponding components and utensils).

By adopting adapted fixing elements that have a watertight seal, connected to one of the openings of the vehicle 2 or to a corresponding wall, it is possible to integrate an inflatable chamber 3 with it, thus obtaining an additional space that appreciably improves habitability.

The inflatable chamber 3 constitutes a solution that is effective and low cost, and is also simple and rapid to install, making it possible to take advantage of such self-supporting inflatable structures to expand the usable spaces.

It should be noted that the cited inflatable structures do not generally entail the presence of frames made of metal or other material; however, the possibility is not ruled out of installing small structural frames at the interconnection tunnel between the "habitable" area of the inflatable structure and the installation wall of the vehicle 2.

Another advantage lies in the possibility of stowing the inflatable chamber 3 (once it has been deflated and separated from the vehicle) in small spaces (for example a portion of the luggage compartment of the vehicle itself): the inflatable chamber 3, in such compacted configuration, in fact presents a minimal space occupation.

The inflatable chamber 3 uses a ventilation assembly (not shown in the figures, and in any case conventional) which mainly performs four functions:
1) Keeping the chamber 3 correctly inflated;
2) Renewing the air inside purifying it from dust, pollen and allergens;
3) Preventing buildups of humidity during use (which could trigger the formation of condensation and the like);
4) Air-conditioning, depending on the environmental conditions, the environment inside the chamber 3 proper.

The ventilation assembly will preferably be chosen to be silent and will be accommodated in soundproofed containers to be positioned inside the vehicle 2 or proximate to it (for example such containers could also be arranged underneath the vehicle 2 thus ensuring that they are not accessible to passers-by).

The system 1 according to the invention creates a new way of managing the spaces of vehicles when parked, by bringing together innovation, design, simplicity and wellbeing.

For example, in vehicles for recreational use, it would be possible to sleep under the stars in the spring (i.e. when the outside temperature is too low to do so without adequate protection) or to appreciate a winter snowfall in the total comfort offered inside the inflatable chamber 3.

The inflatable chamber 3 can in fact be made of transparent and/or opaque polymeric material, according to the specific applicative requirements. The possibility is further not ruled out of combining transparent and opaque portions to generate an environment that complies with specific requirements.

It is convenient to note that the inflatable chamber also constitutes an effective barrier against insects, which in some regions and in some periods of the year can be particularly bothersome, driving away even the keenest campers.

The present invention supersedes the concept of the traditional veranda, mounted externally on vehicles for recreational and/or professional use (for itinerant trading, for rapid response and the like); the system 1 according to the invention in fact makes it possible to create a single, completely sealed and air-conditioned environment between the respective vehicle 2 and an inflatable chamber 3 (which can be partially or completely transparent) that is extremely resistant to atmospheric agents.

The inflatable chamber 3 can preferably be made of PVC, although the use is not ruled out of other transparent and opaque polymeric materials. The same can be provided with several modular elements according to the configuration of the spaces that it is desired to obtain. The possibility also exists of pairing two or more inflatable chambers 3 (arranged for example in series, in parallel, in a closed loop and/or in a grid) in order to create large-sized environments that commence from a vehicle 2.

The openings of the inflatable chambers 3 and the access modules can be constituted by separation partitions constituted by transparent and/or opaque materials (in this case too, generally polymeric). These partitions can have doors according to the variations and modifications required.

There is a simplified form of connection (fixing) to the vehicle 2 (in order to facilitate installation), therefore adopting a rapid coupling with a watertight seal in order to create an environmental continuity between the inside of the vehicle 2 and the inside of the chamber 3 (i.e. same temperature, same humidity, and same comfort).

The quick coupling means can be defined by guides (of complementary shape and dimensions and arranged on the vehicle 2 and on the chamber 3), hinges, magnets, and the like, to be applied directly to any entrance to the vehicle 2 (be it for recreational and/or professional use).

A correct fixing ensures the seal of the inflatable structure against the worst atmospheric conditions, rain, snow and wind up to 70 km/hr.

For the inflation and holding in shape of the inflatable chamber 3, low-consumption turbines are used (for example a respective power use comprised between a minimum of a few tens of W up to about a hundred W). The inflation turbines must be adapted for use with power supply both from the mains electricity supply and from the service batteries of the installation vehicle 2.

It should be noted that positively, an inverter could be installed (adapted to connect the turbines with the batteries of the vehicle 2) and/or a specific uninterruptible power supply (UPS) could also be provided in order to ensure operation of the turbines independently of the vehicle 2 (in order to avoid depending too much on the batteries of the vehicle 2 if the chamber 3 remains installed for a long time continuously).

In order to heat the chamber 3, the systems of the vehicle can be used or a dedicated apparatus can be provided which could be installed in the vehicle 2 or left on the ground proximate to the inflatable chamber 3.

For example the possibility is not ruled out that, downstream and/or upstream of the turbines, there can be an air treatment unit designed to purify and air-condition the flow of air that the turbines will send into the chamber 3 in order to inflate it (or keep it inflated). In this manner, the air conditioning will be ensured by the very operation of the inflation turbines.

The possibility is not excluded of pairing canopy shades (and other similar apparatuses) with the chamber 3 in order to shelter it from the sun.

It is henceforth possible to install toilets in the chamber 3, which can be dry and/or chemical, optionally also providing for the presence of a curtained shower that can expel the water vapor directly.

The system 1 is integrated with exceptional ease and speed of installation, ensuring the same levels of living comfort offered inside the vehicle 2.

The result is the ability to live in a large, healthy space, in contact with nature, taking advantage of the principles of minimum energy consumption, minimum use of material, maximum comfort and maximum interaction with the environment.

The present invention is aimed at the sector of makers of recreational vehicles, which is always looking for innovative ideas for increasing space capacities inside the vehicle 2, while containing their costs and encumbrances.

In fact it is possible to produce vehicles 2 that already incorporate the inflatable chamber 3, defining a new standard in the sector.

At the same time it will be possible to make upgrade kits for existing vehicles 2 already in use, in order to pair them with an inflatable chamber 3 and thus increase their internal space as desired.

It should be noted that the same technical and commercial strategies can also be used by makers of vehicles 2 for professional use: therefore vehicles 2 can be made with an integrated chamber 3 for use in itinerant (traveling) trading and for use in rapid response situations (ability to create workshops and operations bases on-site in a few minutes if required).

It will likewise be possible, for vehicles 2 for professional use as well, to have upgrade and/or conversion kits that allow an inflatable chamber 3 to be attached simply and rapidly.

The technical solution described in the present utility model that is the subject matter of the patent in fact makes it possible:
1) to provide a multifunctional recreational vehicle 2 of reduced size, that can be driven and parked easily, which is adapted to be used on holiday, but also to be used as a habitual means of transport for everyday activities; in any case the vehicle 2 will be capable of offering a better level of habitability than the many traditional models currently on the market, at extremely low cost. The combination of the two characteristics (low encumbrances and high habitability) will make a vehicle 2 provided with the system 1 according to the invention a winning proposition owing to its automotive and living qualities.
2) to provide a multifunctional professional vehicle 2 of reduced size, that can be driven and parked easily (in markets it is advisable to minimize maneuvering spaces, as it is in areas where rapid response is necessary); in any case the vehicle 2 will be capable of offering better operating spaces than the many traditional models currently on the market, at extremely low cost. The combination of the two characteristics (low encumbrances and high habitability) will make a vehicle 2 provided with the system 1 according to the invention a winning proposition owing to its automotive and operational qualities.
3) to apply the conversion kit according to the present utility model to all vehicles 2 (recreational and non-recreational) that exist today, made or to be made, thus increasing their living/operating capacity and comfort at low cost.
4) to place an additional offering on the market that can meet the increasing requirements of the itinerant user (effectively creating a new sector segment).

The invention, thus conceived, is susceptible of numerous modifications and variations, all of which are within the scope of the appended claims. Moreover, all the details may be substituted by other, technically equivalent elements.

In the exemplary embodiments illustrated, individual characteristics shown in relation to specific examples may in reality be interchanged with other, different characteristics, existing in other exemplary embodiments.

In practice, the materials employed, as well as the dimensions, may be any according to requirements and to the state of the art.

The disclosures in Italian Utility Model Application No. 202016000068388 (UA2016U154684) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An integrated system for increasing the living capacity of recreational and general motor vehicles (2), **characterized in that** it comprises an inflatable chamber (3), made of polymeric material, which is provided with means of sealed anchoring to at least one respective portion (4) of a vehicle (2), at least one forced ventilation turbine being coupled to said chamber (3) for the corresponding inflation and maintenance in the configuration of maximum space occupation.

2. The system according to claim 1, **characterized in that** said anchoring means are a watertight seal.

3. The system according to claim 1, **characterized in that** said inflatable chamber (3) is made with a material preferably chosen from among transparent, opaque, and combinations thereof.

4. The system according to claim 1, **characterized in that** said at least one ventilation turbine is powered by way of an apparatus chosen from among the battery of the respective vehicle (2) of installation, the mains electricity supply, or a dedicated generator.

5. The system according to claim 4, **characterized in that** interposed between said at least one ventilation turbine and the respective power supply apparatus are adapters of electrical levels such as transformers, inverters and the like.

6. The system according to claim 1, **characterized in that** said inflatable chamber (3) has a shape chosen from among spherical, semispherical, elliptical, semi-elliptical, prismatic, or fanciful.

7. An expansion kit for vehicles (2) **characterized in that** it comprises an inflatable chamber (3), made of polymeric material, which is provided with means of sealed anchoring to at least one respective portion (4) of a vehicle (2), at least one forced ventilation turbine being coupled to said chamber (3) for the corresponding inflation and maintenance in the configuration of maximum space occupation.
